# EUROPEAN PATENT SPECIFICATION

(11) **EP 3 536 663 B1**
(45) Date of publication and mention of the grant of the patent: **11.03.2026**
(21) Application number: 17867056.8
(22) Date of filing: 02.11.2017
(51) Int. Cl.: C01B 25/08, B82Y 20/00, B82Y 40/00, C07F 9/24, C09K 11/70

(54) **METHOD FOR PRODUCING QUANTUM DOT**
VERFAHREN ZUR HERSTELLUNG EINES QUANTENPUNKTS
PROCÉDÉ DE PRODUCTION DE POINT QUANTIQUE

(30) Priority: 07.11.2016 US 201662418565 P
(43) Date of publication of application: 11.09.2019
(73) Proprietor: Shoei Chemical Inc., Tokyo 163-0443 (JP)
(72) Inventor: MORIYAMA, Takafumi, Tosu-shi, Saga 8410048 (JP); NOVET, Thomas E., Corvallis Oregon 97330 (US); SCHUT, David M., Philomath Oregon 97370 (US)
(74) Representative: SSM Sandmair
(86) International application number: PCT/JP2017/039807
(87) International publication number: WO 2018/084262

(56) References cited:
- WO-A1-2018/114982
- JP-A- 2000 290 268
- JP-A- 2002 284 774
- JP-A- 2003 238 579
- JP-A- 2014 015 549
- MICKAEL D. TESSIER ET AL: "Aminophosphines: A Double Role in the Synthesis of Colloidal Indium Phosphide Quantum Dots", JOURNAL OF THE AMERICAN CHEMICAL SOCIETY, vol. 138, no. 18, 3 May 2016 (2016-05-03), US, pages 5923 - 5929, XP055497797, ISSN: 0002-7863, DOI: 10.1021/jacs.6b01254

## Description

### Technical Field

The present invention relates to a method for producing quantum dot, employing an organophosphine having high boiling point amino substituent for synthesizing quantum dot.

### Background Art

A quantum dot is a semiconductor crystallite small enough to show evidence of 'quantum confinement.' In this size regime, excitons generated within a crystallite are confined spatially by the crystallite's small dimensions. Various optical properties of a quantum dot are size-dependent, therefore, and tunable provided that quantum dots of the desired size can be isolated. This property may be exploited in technologies leveraging the emissive properties of quantum dots-e.g., color displays, lighting, lasing-as well as technologies leveraging absorptive properties-photon detection, photovoltaic applications, etc. Tunability also may be exploited to make specialized electrooptical materials and/or components, such as light-emitting diodes and down-shifting color-conversion sheets. Patent Literature 3 discloses the invention relates to quantum dots (1) with a core (2) of 111-V material, a first layer (3) of ll-VI material and an external shell (4) of ll-VI material to be used, for example, in downconverters. Non-Patent Literature 12 discloses that aminophosphines have recently emerged as economical, easy-to-implement precursors for making InP nanocrystals, which stand out as alternative Cd-free quantum dots for optoelectronic applications, and presents a complete investigation of the chemical reactions leading to InP formation starting from InCl3 and tris(dialkylamino)phosphines.

### Citation List

### Patent Literature

Patent Literature 1: U.S. Patent No. 6,576,291
Patent Literature 2: International Patent Publication No. WO2016/146719
Patent Literature 3: International Patent Publication No.WO2018/114982

### Non-Patent Literature

Non-Patent Literature 1: Janarthanan Gopalakrishnan, Appl. Organometal. Chem. 2009, 23, pp291-318
Non-Patent Literature 2: Mickael D. Tessier, Chem. Mater. 2015, 27, pp4893-4898
Non-Patent Literature 3: Taichi Matsumoto, Chemistry Letters Vol.33, No.11 (2004)
Non-Patent Literature 4: J. Am. Chem. Soc., 2016, 138(18), pp5923-5929 "Aminophosphines: A Double Role in the Synthesis of Colloidal Indium Phosphide Quantum Dots"
Non-Patent Literature 5: J. Phys. Chem. 1995, 99, 7754-7759 "Synthesis and Characterization of InP, Gap, and GaInP2 Quantum Dots"
Non-Patent Literature 6: Nano Letters 2(9): 1027-1030, American Chemical Society, United States (2002). "Formation of High Quality InP and InAs Nanocrystals in a Noncoordinating Solvent,"
Non-Patent Literature 7: CHEMPHYSCHEM 2001, No.5 "Strongly Luminescent InP/ZnS Core - Shell Nanoparticles"
Non-Patent Literature 8: ACS Nano, 2013, 7(10), pp9019-9026 "Highly Efficient Cadmium-Free Quantum Dot Light-Emitting Diodes Enabled by the Direct Formation of Excitons within InP@ZnSeS Quantum Dots"
Non-Patent Literature 9: Chem. Mater., 2011, 23(20), pp4459-4463 "InP@ZnSeS, Core@Composition Gradient Shell Quantum Dots with Enhanced Stability"
Non-Patent Literature 10: J.Am.Chem.Soc.2012, 134, 3804-3809 "Highly Luminescent InP/GaP/ZnS Nanocrystals and Their Application to White Light-Emitting Diodes"
Non-Patent Literature 11: Joung et al. Nanoscale Research Letters 2012, 7:93 "Facile synthesis of uniform large-sized InP nanocrystal quantum dots using tris (tertbutyldimethylsilyl) phosphine"
Non-Patent Literature 12: MICKAEL D. TESSIER ET AL "Aminophosphines: A Double Role in the Synthesis of Colloidal Indium Phosphide Quantum Dots", JOURNAL OF THE AMERICAN CHEMICAL SOCIETY, vol. 138, no. 18, 3 May 2016, pages 5923-5929, XP055497797, us ISSN: 0002-7863, DOI: 10.1021/jacs.6b01254

### Summary of the Invention

### Technical Problem

The particle-size distribution of the product in quantum dot synthesis depends on the competing nucleation rate and growth rate during quantum dot synthesis. The rate of quantum dot nucleation depends on many factors, including the nucleophilicity of the phosphorous precursor and the leaving group stability of the substituents on the organophosphine. Organophosphines that have good leaving groups, such as tris(trimethylsilyl)phosphine [P(TMS)₃] - in which the trimethylsilyl group is an excellent leaving group, are reactive enough to promote fast nucleation of the indium and/or phosphorus precursor materials. This feature makes P(TMS)₃ a good choice for synthesis of relatively small (*e.g*., blue-emitting) InP quantum dots. In order to make larger quantum dots with narrow particle-size distributions, a slower nucleating organophosphine is desirable. Organophosphines amino-substituted with low-boiling parent amines such as tris(dimethylamino)phosphine (P(DMA)₃) and tris(diethylamino)phosphine (P(DEA)₃) have been used for this purpose.

In³⁺ + P(NR₂)₃ → InP + 3HNR₂ + by-products

Conducted at 160 - 360 °C, the above reaction yields InP quantum dots having emission peak wavelengths of 580 nanometers (nm) or longer, with acceptably narrow emission bandwidths. Further, P(DMA)₃ and P(DEA)₃ offer an additional advantage of being more safe and lower toxicity relative to pyrophoric P(TMS)₃.

However, despite the advantages noted above, problems may be encountered using organophosphine precursors substituted with low-boiling parent amines in continuous-flow quantum dot synthesis. Returning to the equation above, a by-product of the InP-forming reaction is the parent amine of the amino-substituent of the organophosphine precursor-*e.g*., dimethylamine (boiling point (b.p.) = 8 °C), diethylamine (b.p. = 55 °C), dipropylamine (b.p. = 84 °C), or dibutylamine (b.p. = 159 °C). These volatile amines are liberated in the gaseous state under the high-temperature conditions of the synthesis. The result is an accumulation of gas bubbles in the liquid reaction medium, which may have various undesirable effects.

For example, when quantum dot synthesis is conducted by batch processing, these volatile amines become gas bubbles, which were then accumulated in a reaction solvent under the high-temperature conditions of synthesis, a temperature distribution in the reaction solvent becomes non-uniform, and a particle-size distribution of synthesized quantum dots becomes wide.

In addition, the following problems arise according to the kinds of volatile amines generated. In the case where volatile amines are dimethylamine, since dimethylamine gas has toxicity, the stage of capturing this gas is required after the synthesis stage. In the case where volatile amines are diethylamine, dipropylamine, and dibutylamine, these gases become liquids in gas piping after volatilization, resulting in failures of clogging of the piping.

On the other hand, quantum dot synthesis conducted under continuous-flow conditions may yield narrower particle-size distributions more consistently than can be achieved routinely using batch processing. In a flowing solution, for example, a precursor mixture can be reproducibly subjected to nucleation and growth conditions for a controlled period of time. Further narrowing of the particle-size distribution is made possible by segmenting the flow of reactants with partitions of an inert fluid, such as bubbles of helium, nitrogen, or argon. The segmentation may limit the longitudinal dispersion of the reactants across zones of different temperature and reactant concentration within the flow system.

However, even in the quantum dot synthesis conducted using continuous flow, when an organophosphine precursor which is amino-substituted with a low-boiling-point parent amine is used, volatile amines are liberated in the gaseous state under the high-temperature conditions of the synthesis, which may have various undesirable effects. For example, the gas evolved displaces the liquid reaction medium, thereby shortening the residence time in nucleation and growth stages of the continuous-flow reactor. Further, because the gas bubbles coalesce randomly as they travel through the system, the overall effect on the residence time is impossible to predict or compensate for, which may impact reproducibility. This coalescence also may disturb any controlled flow segmentation provided intentionally in the reactant flow. Additionally, the changes in surface tension caused by the froth or coalescing bubbles make it difficult to pump the liquid at a consistent pressure and flow rate.

Hence, the present invention is intended to provide a method whereby it becomes possible to produce a quantum dot having narrow particle-size distribution with high reproducibility even when an amino-substituted organophosphine precursor is used in synthesis of the quantum dot.

### Solution to Problem

The method for producing a quantum dot according to one aspect of the present invention is a method for producing a quantum dot, including the steps of: combining a Group IIIB precursor and an organophosphine precursor with each other to form a precursor mixture; and heating the precursor mixture to form a solution of a Group IIIB phosphide quantum dot, wherein the organophosphine precursor comprises one or more amino substituents, and at least one parent amine of the one or more amino substituents has a boiling point of 160 °C or higher at standard atmospheric pressure.

Herein disclosed is also an organophosphine including three amino substituents each derived from a secondary parent amine by cleavage of a nitrogen-hydrogen bond, wherein the secondary parent amine has a boiling point of 160 °C or higher at standard atmospheric pressure.

### Advantageous Effects of the Invention

The present invention can provide a method whereby it becomes possible to produce a quantum dot having narrow particle-size distribution with high reproducibility even when an amino-substituted organophosphine precursor is used in synthesis of the quantum dot.

### Brief Description of the Drawings

FIG. 1 shows an overlay of absorption and emission spectra of InP quantum dots prepared in accordance with an embodiment of this disclosure.
FIG. 2 illustrates an example method for making InP quantum dots.
FIG. 3 shows a schematic depiction of aspects of an example continuous-flow reactor system.
FIG. 4a is a graph showing the results of NMR analysis of the organophosphine precursor prepared in Examples.
FIG. 4b is a graph showing the results of MS analysis of the organophosphine precursor prepared in Examples.

### Description of Embodiments

One disclosed example is directed to a method for making quantum dots containing phosphorus such as IIIB,VB semiconductor materials having a chemical makeup of: (InₓGa-_{y}Al_{z})P, where x + y +z = 1, and x = 0 to 1, y = 0 to 1 and z = 0 to 1. The method comprises combining a Group IIIB precursor, such as an indium precursor, and an organophosphine precursor to form a precursor mixture, the organophosphine precursor having one or more amino substituent, at least one of the parent amine of the amino substituent having a boiling point of 160 °C or higher at standard atmospheric pressure. The method further comprises heating the precursor mixture to form a solution of Group IIIB phosphide quantum dots.

In the present invention, the "quantum dot" refers to a semiconductor fine particle. The number average particle diameter of the quantum dot measured using TEM as an area equivalent circle diameter (Heywood diameter) was preferably 2 to 15 nm. The quantum dot according to the embodiment of the present invention has an emission peak wavelength of preferably 500 nm or more, more preferably 580 nm or more. The emission peak wavelength of the quantum dot refers to a peak wavelength of emission spectrum at the time of excitation with blue light.

Herein disclosed is an organophosphine having three amino substituents, each derived from a secondary parent amine by cleavage of a nitrogen-hydrogen bond, the secondary parent amine having a boiling point of 160 °C or higher at standard atmospheric pressure.

This Summary is provided to introduce a selected part of this disclosure in simplified form, not to identify key or essential features. The claimed subject matter is defined by the claims.

Solutions of indium phosphide (InP) quantum dots may be synthesized by combining an indium precursor and a phosphorous precursor under suitable conditions. In one example, the indium precursor is a complex indium salt prepared *in situ* by dissolving indium trichloride (InCl₃) in a long-chain primary amine solvent, and heating the solution under vacuum. The phosphorous precursor may comprise an organophosphine (PR₃).

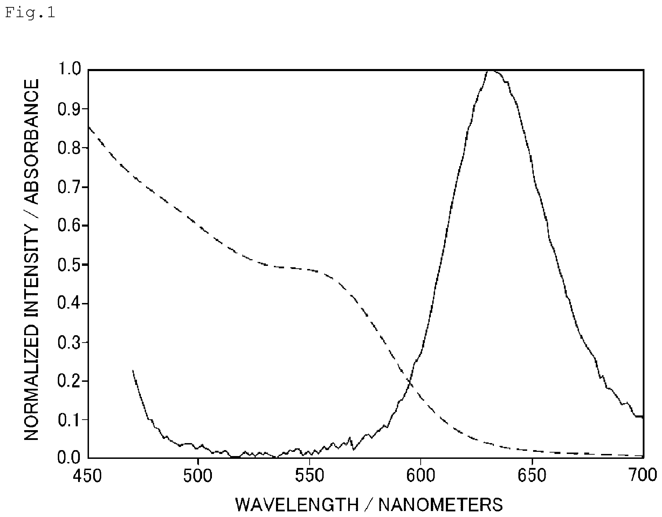

A continuous flow InP synthesis may utilize an amino-substituted organophosphine for which the parent amine group is a liquid under the high-temperature reaction conditions of the InP quantum dot synthesis. These organophosphines, like P(DMA)₃ and P(DEA)₃, exhibit moderate reactivity toward the indium precursor. In one non-limiting example, using tris(dioctylamino)phosphine (P(DOA)₃) as the organophosphine precursor, InP quantum dots having emission peak wavelength between 580 and 680 nm, and an FWHM of emission spectrum of 50 nm, were prepared. FIG. 1 shows example absorption and emission spectra of this material. The absorption spectrum of the InP core is represented by a broken line in FIG. 1, and the emission spectrum of InP/ZnSe/ZnS after shell formation is represented by a solid line.

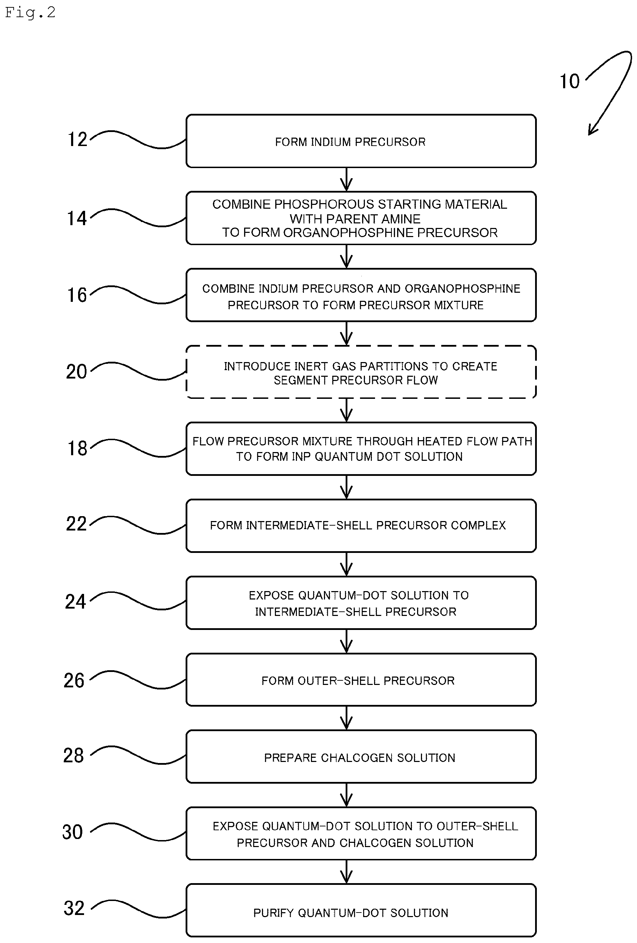

FIG. 2 illustrates an example method 10 for making InP quantum dots. The method is applicable, for example, to core-shell-shell (CSS) quantum dots having an InP core, a ZnSe intermediate shell, and a ZnS outer shell. However, any other suitable quantum dot structure may be similarly formed having any suitable core and/or number and arrangement of shells.

At 12 of method 10, an indium precursor is formed. For example, the indium precursor may be formed *in situ* by dissolving indium trichloride (InCl₃) in a long-chain primary amine, such as oleylamine. In some examples, a divalent zinc salt, such as zinc chloride (ZnCl₂), may be incorporated into the indium precursor. Without wishing to be bound by theory, it is believed that the zinc may enhance the photoluminescence quantum yield (PLQY) of the final product as it 'etches back' the surface of the growing InP nanocrystal. Zinc cations are believed to preferentially attack high energy centers, which may be defect sites. To reflect the fact that a non-stoichiometric amount of Zn may be incorporated onto the InP core, the designation 'InZnP' may be used in place of 'InP' in some instances. In one example, 3.0 grams (g) of InCl₃, 9.0 g of ZnCl₂, and 150mL of oleylamine are combined under dry nitrogen and heated at 120 °C under vacuum for one hour, and then cooled. The cooled solution, which may contain one or more In³⁺ amine complexes or complex salts, may be used as the indium precursor. In other examples, the indium precursor may include one or more indium carboxylate complexes or complex salts. Indium trichloride (InCl₃) and / or zinc chloride (ZnCl₂) can be replaced with other indium halides and zinc halides depending on the desired size of the quantum dots.

At 14 of method 10, a phosphorous starting material is combined with a parent amine to form an organophosphine precursor having one or more amino substituents derived from the parent amine. The parent amine is selected based, at least in part, on its boiling point. In some examples, the parent amine may have a boiling point of 160 °C or higher at standard atmospheric pressure. In another example, the organophosphine precursor has three amino substituents, at least one of which of the parent amine has a boiling point above 160 °C at standard atmospheric pressure.

In some embodiments, the phosphorous starting material is phosphorous trichloride (PCl₃) or phosphorous tribromide (PBr₃), which is combined with a secondary amine NHR₂ or NHRR'. R and R' may each include a linear or branched alkyl group of suitable molecular weight (*vide infra*)*.* R and R' may also be combined in the form of an α,ω-diamine. In one example, the reaction to prepare the organophosphine precursor may be:

PCl₃ + 3 NH(2-ethyl-n-hexyl)₂ → P(N(2-ethyl-n-hexyl)₂)₃ + 3 HCl.

The reaction may be conducted under conditions in which the HCl or HBr by-product is driven from the solution-*e.g*., by gentle heating, inert gas purge, or under vacuum.

In another embodiment, the phosphorous starting material is another organophosphine having a low-boiling amino substituent-*e.g*., P(DMA)₃, P(DEA)₃, tris(dipropylamino)phosphone (P(DPA)₃) or tris(dibutylamino)phosphone (P(DBA)₃). The low-boiling (low boiling point) means that the boiling point is lower than 160 °C at atmospheric pressure. For example, the boiling point of P(DMA)₃ is 8 °C and it evaporates at room temperature. The phosphorous starting material is metathesized by reaction with a secondary amine NHR₂ or NHRR', as described above. In one example, the reaction to prepare the organophosphine precursor may be:

P(DMA)₃ + 3 DOAH → P(DOA)₃ + 3 DMAH.

In one example, 35.7 g of dioctylamine (DOAH) is degassed under vacuum at 50 °C for 1 hour. 13.5 milliliters (mL) of tris(diethylamino)phosphine(P(DEA)₃) is added, and the resulting mixture is heated at 150 °C for 5 hours under dry nitrogen, forming P(DOA)₃. The DOAH, having a boiling point of 297 °C, remains a liquid during this process, while the more volatile DEAH readily escapes the solution. Escape of the volatile by-product may be further assisted by inert-gas purge, reduced pressure, *etc*.

In the examples above, each molecule of the organophosphine precursor includes three amino substituents. In other examples, at least one substituent may be an alkyl or aryl group-*e.g*., P(C₂H₅)(DOA)₂, P(C₆H₅)(DOA)₂, *etc.* In the examples above, the organophosphine precursor has three amino substituents, of which two or three identical parent amines are present. In other examples, at least one of the amino substituents may be different-*e.g*., P(2-ethyl-n-hexylamino)(DOA)₂. In the examples above, the amino substituent is a secondary amino substituent-*i.e.*, derived from a secondary parent amine by cleavage of a nitrogen-hydrogen bond. In other examples, the parent amine of at least one amino substituent may be primary parent amine.

Some parent amines having boiling points of 160 °C or higher at standard atmospheric pressure may include ten to twenty four carbon atoms. Accordingly, the amino substituent of the organophosphine precursor may be N(*n*-octyl)₂ or N(2-ethyl-*n*-hexyl)₂, as in the examples above. In these and other examples, the organophosphine precursor may be selected based, at least in part, on its solubility; the organophosphine precursor may be freely soluble in oleylamine at, for instance, about 160 °C to 360 °C. In some non-limiting embodiments, the organophosphine thus formed may have the general formula P(NR¹R²)₃, where each of R¹ and R² is a linear or branched alkyl CₘH₂ₘ₊₁ or a cyclic alkyl C₅H₈-R³ or C₆H₁₀-R⁴, where 5 ≤ m ≤ 12, R³ is a hydrogen atom or linear or branched alkyl CₙH₂ₙ₊₁ with 0 ≤ n ≤ 7, and R⁴ is a hydrogen atom or linear or branched alkyl CₙH₂ₙ₊₁ with 0 ≤ n ≤ 6.

At 16 of method 10, the organophosphine precursor is combined with the indium precursor to form a precursor mixture. The organophosphine precursor and the indium precursor (group IIIB precursor) may be heated to about 160 °C to 360 °C before mixing. In some examples, the indium and organophosphine precursors are combined in an amine solvent-*e.g*., a long-chain primary amine solvent such as oleylamine. In some embodiments, the precursor mixture may be maintained under vacuum for 5 to 20 hours prior to being subjected to nucleation conditions.

At 18 of method 10, the precursor mixture flows through a heated flow path to form an InP quantum dot solution. In some embodiments, the precursor mixture may flow in the form of a series of liquid segments separated by gaseous partitions. At optional step 20, therefore, method 10 includes periodic introduction of inert gas partitions into the reactant flow. In some embodiments, the flowing of the precursor mixture is regulated so as to control the residence time of the precursor mixture in the heated flow path or one or more zones thereof-*e.g*., a nucleation zone, a growth zone, a shell-forming zone, *etc*.

InP quantum dots form when the precursor mixture is heated to temperatures in the range of, for example, 160 - 360 °C. In one embodiment, the precursor mixture is heated initially to 50 °C for 1 hour under dry nitrogen. During the subsequent nucleation and growth stages, the precursor mixture is flowed through 80 feet of one-eighth inch internal diameter stainless-steel tubing maintained at 200 °C. The nanocrystalline InP product solution may be collected and stored in a nitrogen-purged flask prior to spectroscopic analysis, if desired. In one example using P(DOA)₃, the residence time of the reactant mixture based on the indicated flow parameters was about 19 minutes. In contrast, when tris(diethylamino)phosphine, an organophosphine precursor substituted with a low-boiling parent amine, is used as the organophosphine precursor, the residence time may be shortened to about 10 minutes due to gas generation and unstable flow.

Subsequently in method 10, an intermediate shell may be assembled upon the InP quantum dot core. The intermediate shell may perform various functions. First, the intermediate shell may passivate the surface of the InP core material. For example, an InP core may present dangling bonds, which may be trap sites for non-radiative recombination. A ZnSe intermediate shell (or a shell of another suitable material) may be used to passivate these dangling bonds, resulting in increased quantum efficiency for radiative recombination. Second, the intermediate shell may serve as an intermediary layer between the core and the outer shell of the quantum dot. The lattice mismatch between InP and ZnS is about 8%, but the lattice mismatch between InP and GaP is about 7%, and the lattice mismatch between InP and ZnSe is about 4%. Better lattice matching reduces the number of interfacial defect sites, thereby increasing the photoluminescence quantum yield (PLQY). Thus, at 22, by combining a suitable intermediate shell precursor-forming salt such as zinc carboxylates such as trialkylphosphine selenide, selenol, zinc acetate, zinc propionate, zinc myristate, zinc oleate, and zinc stearate; zinc halides such as zinc fluoride, zinc chloride, zinc bromide, and zinc iodide; zinc thiolate, and dialkylzinc with a suitable ligand, an intermediate shell precursor complex can be formed.

At 24, the solution containing the intermediate-shell precursor complex is added to the solution containing the quantum dot core, to form, for example, an InP / ZnSe quantum dot system. Suitable shell materials include, but are not limited to: IIIB, VB materials such as GaP, AlP, or IIA, VIB materials such as ZnS, MgS, ZnSe, MgSe, CaS, CaSe or CdS. Furthermore, multiple inner shells may be placed onto the core, using the materials mentioned to form core / shell or even core / shell / shell heterostructures.

After the above transformation is complete, a ligand-terminated outer shell may be formed on each quantum dot. To that end, an outer-shell-forming metal precursor complex is formed, at 26. The outer-shell-forming metal precursor complex may be a complex of a group IIB metal ion (group-12 under IU-PAC rules). The outer-shell-forming metal precursor complex may be a divalent zinc chelate, for example. To form the outer-shell-forming metal precursor complex, a suitable metal salt-*e.g.*, zinc acetate, is combined with a suitable ligand.

Separately, at 28, a solution of one or more chalcogen compounds is prepared. Such chalcogen compounds may include thiols, disulfides, or selenols, for example. In one example, a mixed thiol or corresponding disulfide solution-*e.g.*, 1-dodecanethiol and 1-hexanethiol (at any suitable ratio) may be combined with solvent. At 30, the outer-shell-forming metal precursor complex and the chalcogen compound solution are combined with the solution of quantum dot core material to form the shelled quantum dot product-InP / ZnSe / ZnS(Lₓ), for example, where L = 1-dodecanethiolate and/or 1-hexanethiolate.

The above process yields a lipophilic core-shell-shell (CSS) quantum dot material. In the case of InP / ZnSe / ZnS(Lₓ), the emission peak wavelength of the material ranges from 520 to 650 nm when excited at 400 or 450 nm. Thermogravimetric analysis (TGA) shows the organic content-in the form of n-alkyl ligands stabilizing the quantum dots-to be 20 to 30% in some examples.

No aspect of the foregoing process is intended to be limiting in any way, for numerous variations, additions, and omissions are contemplated as well. In some examples, for instance, a zinc selenide (ZnSe) outer shell may be used in place of the ZnS outer shell described above. In that event, corresponding selenols may be used at 24, in place of the thiols. In addition, the intermediate shell may not be necessary for all applications, as other strategies may be used to passivate dangling bonds of a quantum dot core or outer shell. In some examples, therefore, steps 22 and 24 of method 10 may be omitted, to yield a single-shelled product-*e.g*., InP / ZnS(Lₓ) or InP / ZnSe(Lₓ). In still other examples, the InP core may be substituted for another IIIB, VB semiconductor, such as GaP. In particular, the IIIB, VB phosphorous-containing nanomaterials called out previously may be utilized-*e.g*., (AlₓGa_{y}In_{z})P. Additionally, multiple anions may also be incorporated to give a varied structure-*e*.*g*., (AlₓGa_{y}In_{z})(NₘPₙAsₒSbₚ), where: x + y + z = 1; m + n + o + p = 1; x = 0 to 1; y = 0 to 1; z = 0 to 1; m = 0 to 1; n = 0 to 1; o = 0 to 1; and p = 0 to 1.

At 32 of method 10, the quantum dot product may be further purified. In one example, quantum dots may be precipitated from solution by addition of a polarity-changing solvent, such as acetone. The solid quantum dot material may be collected by filtration or by centrifugation, while supernate containing unreacted starting materials and other impurities may be discarded or recycled. The solid then may be washed with additional solvent and redissolved. This purification process may be repeated, for example, two to four times, or until the desired purity is achieved. Other modes of purification may include flocculation, liquid-liquid extraction, distillation, electrodeposition, size-selection chromatography, and/or ultrafiltration, as examples. Any or all of the above purification modes may be used alone or in combination.

In examples, one, some, or all of the above steps may be enacted via batch processing. In other examples, continuous-flow processing may be used. In yet other examples, at least some of the precursor solutions may be premixed together prior to use in a continuous-flow processing method.

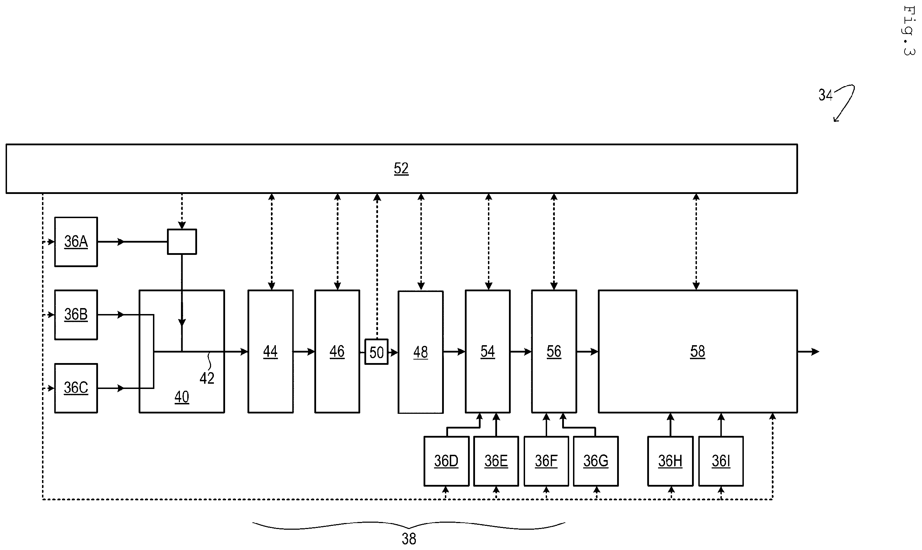

FIG. 3 shows aspects of an example continuous-flow reactor system 34. The continuous-flow reactor system includes a plurality of fluid sources 36, which may include compressed-gas cylinders, pumps, and/or liquid reservoirs, for example. The continuous-flow reactor system also includes a plurality of reaction devices 38 and a segmentation device 40. Taken together, the plurality of reaction devices 38 comprise a quantum dot stage configured to release a quantum dot solution based on an organic solvent. In the illustrated example, fluid sources 36B and 36C may provide, respectively, the core-forming indium precursor and the organophosphine precursor solutions.

Continuous-flow reactor system 34 includes a flow path for the reaction mixture comprising a primary conduit 42 that passes through the plurality of reaction devices 38. In segmentation device 40, an immiscible, non-reacting segmentation fluid (*e.g*., a relatively inert gas such as nitrogen, argon, or helium) is inserted into the flow path to provide segmented flow of the reaction mixture. The segmented flow provides a narrower distribution of residence times in downstream reaction devices than without segmentation.

From segmentation device 40, the segmented reaction mixture and immiscible segmentation fluid may pass into an optional energized activation stage 44, where the mixture is rapidly energized by an energy source-*e.g*., a monomodal, multimodal or multivariable frequency microwave source, a light source such as a high energy lamp or laser, a high temperature thermal (*e.g*., resistive heating) device, a sonicating device, or any suitable combination of energy sources. Here, the evolving quantum dots may be rapidly and uniformly nucleated. Accordingly, method 10 above may further include thermally activating the combined core-forming indium and organophosphine precursors. The flow of the nucleated precursors then passes into incubation stage 46, where a heat source promotes growth of the nucleated precursors of the nanocrystalline core material under continuous-flow conditions. The process is quenched in collection stage 48, where the quantum dot-containing solution may optionally be separated from the immiscible segmentation fluid. In other implementations, energized activation stage 44 may be omitted, as nucleation and growth may occur in a same reactor stage.

In the example of FIG. 3, analysis module 50 is arranged fluidically upstream of collection stage 48. In the analysis module, an assay may be conducted that tests one or more physical properties of the quantum dots emerging from incubation stage 46. In some examples, the analysis module may communicate with process controller 52. The process controller comprises an electronic control device operatively coupled to fluid sources 36 and to various inputs of reaction devices 38. Such inputs may include energy flux in energized activation stage 44, heating in incubation stage 46, and various flow-control componentry arranged throughout reactor system 34. Closed-loop feedback based on the property or properties assayed in the analysis module may be used to automatically optimize or adjust quantum dot size, composition, and/or other properties.

Continuing in FIG. 3, continuous-flow reactor system 34 includes an intermediate-shell fabrication stage 54 fluidically downstream of collection stage 48, and an outer-shell fabrication stage 56 fluidically downstream of the intermediate-shell fabrication stage. Reactor system 34 of FIG. 3 also includes a purification stage 58 arranged downstream of outer-shell fabrication stage 56. The structure and function of purification stage 58 may differ in the different embodiments of this disclosure.

### Example

### [Example 1]

### <Preparation of Group IIIB precursor>

Under dry nitrogen, 3.0 g of indium trichloride (InCl₃), 9.0 g of zinc chloride (ZnCl₂), and 150 mL of oleylamine were combined, then heated under vacuum at 120 °C for one hour, and thereafter cooled. Thus, an indium precursor (Group IIIB precursor) containing an In³⁺ amine complex or a complex salt thereof was obtained.

### <Preparation of organophosphine precursor>

Under vacuum, 35.7 g of dioctylamine (DOAH) was degassed at 50 °C for one hour. To the dioctylamine, 13.5 mL of tris(diethylamino)phosphine (P(DEA)₃) was added, and the resulting mixture was heated at 150 °C for 5 hours under dry nitrogen. Thus, tris(dioctylamino)phosphine (P(DOA)₃), which is an organophosphine precursor, was obtained.

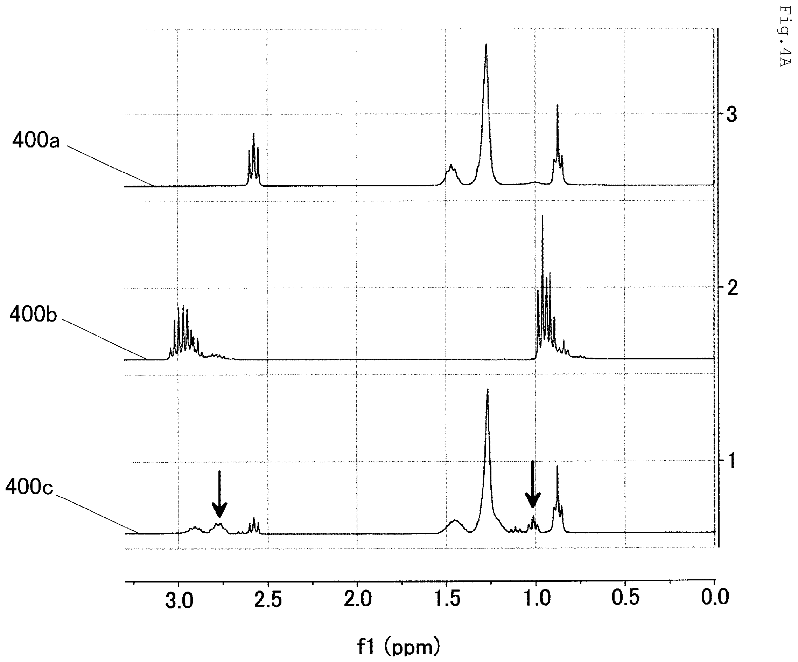

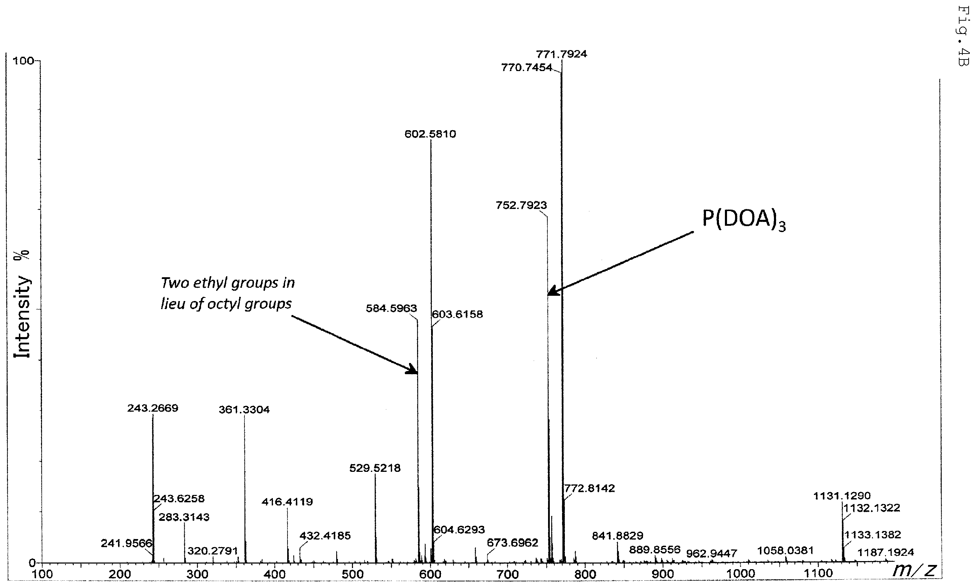

The results obtained by analyzing the resulting organophosphine precursor by NMR (Nuclear Magnetic Resonance) is shown in FIG. 4A, and the results obtained by analyzing the resulting organophosphine precursor by MS (Mass Spectrometry) is shown in FIG. 4B. In FIG. 4A, the upper chromatogram (400a) indicates the result of DOAH which is parent amine, the middle chromatogram (400b) indicates the result of P(DEA)₃, which is a phosphorous starting material, and the lower chromatogram (400c) indicates the result of the organophosphine precursor prepared from DOAH and P(DEA)₃. The lower chromatogram in FIG. 4A, peaks indicated by arrows are derived from P(DOA)₃. FIG. 4B shows the results obtained by analyzing the organophosphine precursor prepared from DOAH and P(DEA)₃ using MS, and a peak derived from P(DOA)₃ was detected. FIGS. 4A and 4B demonstrate that the organophosphine precursor can be prepared from parent amine and a phosphorous starting material.

The organophosphine precursor prepared from parent amine and a phosphorous starting material may contain about 40% or less of by-product. The content of the by-product is preferably about 20% or less.

### <Preparation of precursor mixture>

The indium precursor and the organophosphine precursor obtained in the above manner were combined with each other in oleylamine to form a precursor mixture.

### <Preparation of quantum dot>

The precursor mixture obtained in the above manner was first heated under dry nitrogen up to 50 °C for one hour. Subsequently, the precursor mixture and nitrogen which is a segmentation fluid were caused to flow through 80 feet of one-eighth inch internal diameter stainless-steel tubing maintained at 200 °C at 5 mL/min and 1.5 sccm, respectively.

Thus, a nanocrystalline InP product (InP quantum dot) solution was obtained.

The number average particle diameter of the resulting InP quantum dot measured using TEM was 4 nm.

### <Preparation of intermediate-shell precursor>

Under inert gas atmosphere, 44 mmol of selenium was completely dissolved in 20 ms of tri-n-octylphosphine to form a selenium precursor.

A zinc precursor was formed by combining 10 g of zinc stearate and 40 ml of 1-octadecene.

### <Preparation of ZnSe intermediate shell>

5.5 ml of the InP quantum dot solution was heated up to 180 °C, and 1 mL of the selenium precursor was then added thereto over 40 minutes. Thereafter, the heating temperature was raised up to 200 °C and then kept at 200 °C for one hour. The heating temperature was raised up to 220 °C, 4 ml of the zinc precursor was then added over 10 minutes, and the resulting mixture was then kept at 220 °C for 20 minutes. The heating temperature was raised up to 240 °C, 0.7 ml of the selenium precursor was then added over 28 minutes, and the resulting mixture was then kept at 240 °C for 2 minutes. The heating temperature was raised up to 280 °C, 4 ml of the zinc precursor was then added over 10 minutes, and the resulting mixture was then kept at 280 °C for 20 minutes. The heating temperature was raised up to 320 °C, 0.7 ml of the selenium precursor was then added over 28 minutes, and the resulting mixture was then kept at 320 °C for 2 minutes, and then 4 ml of the zinc precursor was then added over 10 minutes, and the resulting mixture was then kept at 320 °C for 50 minutes. Thus, a ZnSe shell was formed.

### <Preparation of ZnSe outer shell>

1-dodecanethiol was added to the InP/ZnSe solution obtained in the above manner, which was then heated at 270 °C to form a ZnS shell.

FIG. 1 shows absorption and emission spectra of InP quantum dots obtained in the above manner. In FIG. 1, a broken line represents the absorption spectrum of the InP core before shell formation, and a solid line represents the emission spectrum of InP/ZnSe/ZnS after shell formation.

### Reference Signs List

- 10: Exemplary method for manufacturing InP
- 34: continuous-flow reactor system
- 36A-36I: fluid source
- 38: reaction device
- 40: segmentation device
- 42: primary conduit
- 44: energized activation stage
- 46: incubation stage
- 48: collection stage
- 50: analysis module
- 52: process controller
- 54: intermediate-shell fabrication stage
- 56: outer-shell fabrication stage
- 58: purification stage
- 400a: parent amine
- 400b: phosphorous starting material
- 400c: organophosphine precursor

## Claims

1. A method for producing a quantum dot, comprising the steps of:
combining a Group IIIB precursor and an organophosphine precursor with each other to form a precursor mixture; and
heating the precursor mixture to form a solution of a Group IIIB phosphide quantum dot, wherein
the organophosphine precursor comprises one or more amino substituents, and
at least one parent amine of the one or more amino substituents has a boiling point of 160 °C or higher at standard atmospheric pressure.

2. The method according to claim 1, wherein
in the step of heating the precursor mixture to form a solution of a Group IIIB phosphide quantum dot, the precursor mixture is caused to flow through a heated flow path to heat the precursor mixture.

3. The method according to claim 2, wherein flow of the precursor mixture comprises flow of a plurality of divided liquid segments separated by gaseous partitions.

4. The method according to any one of claims 1 to 3, wherein the organophosphine precursor comprises three amino substituents.

5. The method according to any one of claims 1 to 4, wherein the organophosphine precursor comprises three amino substituents, and two or three parent amines of the three amino substituents are identical to each other.

6. The method according to any one of claims 1 to 5, wherein the one or more amino substituents are secondary amino substituents.

7. The method according to any one of claims 1 to 6, wherein the Group IIIB precursor comprises an indium precursor.

8. The method according to any one of claims 1 to 7, wherein combining a Group IIIB precursor and an organophosphine precursor comprises combining the Group IIIB precursor and the organophosphine precursor in an amine solvent that boils at 160 °C or higher at standard atmospheric pressure.

9. The method according to any one of claims 1 to 8, wherein the quantum dot has a particle diameter of 2 to 15 nm.

10. The method according to any one of claims 1 to 9, further comprising the step of, before the step of combining a Group IIIB precursor and an organophosphine precursor with each other to form a precursor mixture,
combining a phosphorous starting material and a parent amine to form an organophosphine precursor having one or more amino substituents derived from the parent amine.

11. The method according to claim 10, wherein the phosphorous starting material comprises at least one of phosphorous trichloride or phosphorous tribromide.

12. The method according to claim 10 or 11, wherein the phosphorous starting material comprises organophosphine having a low-boiling-point amino substituent.

13. The method according to any one of claims 10 to 12, wherein combining the phosphorous starting material and the parent amine comprises heating and causing a volatile by-product to discharge.

## Patentansprüche

1. Verfahren zur Herstellung eines Quantenpunkts, umfassend die folgenden Schritte:
Kombinieren eines Vorläufers der Gruppe IIIB und eines Organophosphin-Vorläufers miteinander, um eine Vorläufermischung zu bilden; und
Erhitzen der Vorläufermischung, um eine Lösung eines Phosphid-Quantenpunkts der Gruppe IIIB zu bilden, wobei
der Organophosphin-Vorläufer einen oder mehrere Aminosubstituenten umfasst und
mindestens ein Stammamin der einen oder mehreren Aminosubstituenten einen Siedepunkt von 160 °C oder höher bei Standardatmosphärendruck aufweist.

2. Verfahren nach Anspruch 1, wobei
in dem Schritt des Erhitzens der Vorläufermischung zur Bildung einer Lösung eines Phosphid-Quantenpunkts der Gruppe IIIB die Vorläufermischung durch einen erhitzten Strömungsweg strömen gelassen wird, um die Vorläufermischung zu erhitzen.

3. Verfahren nach Anspruch 2, wobei der Fluss der Vorläufermischung den Fluss einer Vielzahl von getrennten Flüssigkeitssegmenten umfasst, die durch gasförmige Trennwände voneinander getrennt sind.

4. Verfahren nach einem der Ansprüche 1 bis 3, wobei der Organophosphin-Vorläufer drei Aminosubstituenten umfasst.

5. Verfahren nach einem der Ansprüche 1 bis 4, wobei der Organophosphin-Vorläufer drei Aminosubstituenten umfasst und zwei oder drei Stammamine der drei Aminosubstituenten identisch sind.

6. Verfahren nach einem der Ansprüche 1 bis 5, wobei der eine oder die mehreren Aminosubstituenten sekundäre Aminosubstituenten sind.

7. Verfahren nach einem der Ansprüche 1 bis 6, wobei der Gruppe-IIIB-Vorläufer einen Indiumvorläufer umfasst.

8. Verfahren nach einem der Ansprüche 1 bis 7, wobei das Kombinieren eines Vorläufers der Gruppe IIIB und eines Organophosphin-Vorläufers das Kombinieren des Vorläufers der Gruppe IIIB und des Organophosphin-Vorläufers in einem Amin-Lösungsmittel, das bei Standardatmosphärendruck bei 160 °C oder höher siedet, umfasst

9. Verfahren nach einem der Ansprüche 1 bis 8, wobei der Quantenpunkt einen Partikeldurchmesser von 2 bis 15 nm aufweist.

10. Verfahren nach einem der Ansprüche 1 bis 9, das ferner den Schritt umfasst, vor dem Schritt des Kombinierens eines Vorläufers der Gruppe IIIB und eines Organophosphin-Vorläufers miteinander, um eine Vorläufermischung zu bilden,
ein Phosphorausgangsmaterial und ein Stammamin miteinander zu kombinieren, um einen Organophosphin-Vorläufer mit einem oder mehreren Aminosubstituenten zu bilden, die von dem Stammamin abgeleitet sind.

11. Verfahren nach Anspruch 10, wobei das Phosphorausgangsmaterial mindestens eines von Phosphortrichlorid oder Phosphortribromid umfasst.

12. Verfahren nach Anspruch 10 oder 11, wobei das Phosphorausgangsmaterial Organophosphin mit einem niedrigsiedenden Aminosubstituenten umfasst.

13. Verfahren nach einem der Ansprüche 10 bis 12, wobei das Kombinieren des Phosphorausgangsstoffs und des Stammamin eine Erhitzung und das Verursachen einer Abgabe eines flüchtigen Nebenprodukts umfasst.

## Revendications

1. Procédé de production d'un point quantique, comprenant les étapes consistant à :
combiner un précurseur du groupe IIIB et un précurseur organophosphine l'un avec l'autre pour former un mélange de précurseurs, et
chauffer le mélange de précurseurs pour former une solution d'un point quantique de phosphure du groupe IIIB ;
ledit précurseur organophosphine comprenant un ou plusieurs substituants amino, et
au moins une amine de départ du ou des substituants amino ayant un point d'ébullition supérieur ou égal à 160 °C à pression atmosphérique normale.

2. Procédé selon la revendication 1, dans lequel
dans l'étape consistant à chauffer le mélange de précurseurs pour former une solution d'un point quantique de phosphure du groupe IIIB, le mélange de précurseurs est amené à s'écouler par un chemin d'écoulement chauffé afin de chauffer le mélange de précurseurs.

3. Procédé selon la revendication 2, dans lequel l'écoulement du mélange de précurseurs comprend l'écoulement d'une pluralité de segments liquides divisés séparés par des séparateurs gazeux.

4. Procédé selon l'une quelconque des revendications 1 à 3, dans lequel le précurseur organophosphine comprend trois substituants amino.

5. Procédé selon l'une quelconque des revendications 1 à 4, dans lequel le précurseur organophosphine comprend trois substituants amino, et deux ou trois amines de départ des trois substituants amino sont identiques entre elles.

6. Procédé selon l'une quelconque des revendications 1 à 5, dans lequel le ou les substituants amino sont des substituants amino secondaires.

7. Procédé selon l'une quelconque des revendications 1 à 6, dans lequel le précurseur du groupe IIIB comprend un précurseur d'indium.

8. Procédé selon l'une quelconque des revendications 1 à 7, dans lequel la combinaison d'un précurseur du groupe IIIB et d'un précurseur organophosphine comprend la combinaison du précurseur du groupe IIIB et du précurseur organophosphine dans un solvant aminé qui bout à 160 °C ou plus à pression atmosphérique normale.

9. Procédé selon l'une quelconque des revendications 1 à 8, dans lequel le point quantique a un diamètre de particule de 2 à 15 nm.

10. Procédé selon l'une quelconque des revendications 1 à 9, comprenant en outre l'étape consistant à, avant l'étape de combinaison d'un précurseur du groupe IIIB et d'un précurseur d'organophosphine l'un avec l'autre pour former un mélange de précurseurs,
combiner une matière première phosphorée et une amine de départ pour former un précurseur organophosphine ayant un ou plusieurs substituants amino dérivés de l'amine de départ.

11. Procédé selon la revendication 10, dans lequel la matière première phosphorée comprend au moins une matière parmi le trichlorure de phosphore et le tribromure de phosphore.

12. Procédé selon la revendication 10 ou 11, dans lequel la matière première phosphorée comprend une organophosphine ayant un substituant amino à bas point d'ébullition.

13. Procédé selon l'une quelconque des revendications 10 à 12, dans lequel la combinaison de la matière première phosphorée et de l'amine de départ comprend un chauffage et la réalisation d'un dégagement d'un sous-produit volatil.
